# EUROPÄISCHE PATENTANMELDUNG

(11) **EP 3 581 273 A1**
(43) Veröffentlichungstag der Anmeldung: **18.12.2019**
(21) Anmeldenummer: 19180012.7
(22) Anmeldetag: 13.06.2019
(51) Int. Cl.: B01J 47/06, B01J 39/20, B01J 47/016, B01J 47/10, C02F 1/42, C02F 1/52

(54) **VERFAHREN ZUM HERSTELLEN EINES IONENAUSTAUSCHERMATERIALS, UND VERWENDUNG DES IONENAUSTAUSCHERMATERIALS ZUM KATALYTISCHEN FÄLLEN VON INHALTSSTOFFEN AUS LÖSUNGEN**

(30) Priorität: 13.06.2018 AT 504772018
(71) Anmelder: WCR Technologie GmbH, 42781 Haan (DE)
(72) Erfinder: BERBERICH, Ramona, 6092 Birgitz (AT); LEITER, Klaus, 6176 Völs (AT)
(74) Vertreter: Torggler & Hofinger Patentanwälte

(57) **Zusammenfassung**

Die Erfindung betrifft ein Verfahren zum Herstellen eines lonenaustauschermaterials zum Behandeln von Lösungen, insbesondere Trinkwasser, wobei das lonenaustauschermaterial während des Herstellungsverfahrens mit Ultraschall beschallt wird. Ausserdem betrifft die Erfindung die Verwendung besagten Ionenaustauschermaterials zur katalytischen Fällung von Inhaltsstoffen aus Lösungen, insbesondere zur Kalkkristallkeimbildung in Wasser.

## Beschreibung

Die Erfindungen betrifft ein Verfahren zum Herstellen eines Ionenaustauschermaterials zum Behandeln von Lösungen, insbesondere Trinkwasser. Weiters betrifft die Erfindung die Verwendung eines erfindungsgemäß hergestellten lonenaustauschermaterials.

lonenaustauschermaterialien, vielseitig technische Anwendungen, kommen insbesondere in der Aufbereitung von Wasser, vor allem auch zur Aufbereitung von Trinkwasser, zur Anwendung.

Beispiele für katalytisch wirkende lonenaustauschermaterial sind in der europäischen Patentschrift EP 1 363 858 B1 und in der europäischen Patentschrift EP 0 957 066 B1 beschrieben.

Zur Herstellung eines solchen katalytisch wirksamen Ionenaustauschermaterials kann beispielsweise ein schwachsaures Ionenaustauschermaterials von der H-Form in die Ca-Form gebracht werden, indem man das zunächst in der H-Form vorliegende lonenaustauschermaterial mit einer wässrigen gesättigten Calziumhydroxid Ca(OH)₂- Lösung in Kontakt bringt, wobei die Calziumhydroxid-Lösung mit noch ungelöstem Calziumhydroxid in Kontakt steht. Das ungelöste Calziumhydroxid stellt sicher, dass durch Nachlösen immer eine gesättigte Lösung vorhanden ist.

Aufgabe der Erfindung ist es, die bisher bekannten Herstellungsverfahren für lonenaustauschermateriale sichtlich Wasser- und Energieffizienz, Produktionszeit verfahrenstechnisch zu verbessern und auch die Produktqualität der hergestellten lonenaustauschermateriale zu optimieren.

Erfindungsgemäß wird diese Aufgabe durch ein Verfahren mit den Merkmalen des Anspruchs 1 gelöst.

Einsatz von Ultraschall in Zusammenhang mit lonenaustauschermaterialen für Reinigungszwecke ist zwar bereits bekannt (US3849196A), allerdings handelt es sich dabei nicht um den Einsatz von Ultraschall beim Herstellungsverfahren vor dem eigentlichen Ersteinsatz in der zu behandelnden Lösung dem zu behandelnden Trinkwassers, sondern eine bloße Reinigung von lonenaustauschermaterialen nach längerem Betrieb und Einsatz.

Im Gegensatz dazu wird der Ultraschall bei der Erfindung während des Herstellungsverfahrens eingesetzt. So gibt es im Wesentlichen zwei große Gruppen von Einsatzmöglichkeiten.

Die erste Gruppe besteht darin, während des Herstellungsverfahrens durch den Einsatz von Ultraschall physikalisch - chemische Vorgänge (Reaktions-Verfahrensschritt) zu beschleunigen und zu verbessern.

Beispielsweise kann das bekannte Verfahren eingesetzt werden, bei dem ein schwachsaures lonenaustauschermaterial ähnlich wie in der EP 1 098 706 B1 von der H-Form in die Ca-Form umgewandelt wird. Durch zusätzliche Beaufschlagung mit Ultraschall kann die Prozessdauer verkürzt und die Beladung des Ionenaustauschermaterials mit Calziumionen verbessert werden.

Die zweite große Gruppe von Anwendungsmöglichkeiten von Ultraschall während dem Herstellungsverfahren des lonenaustauschermaterials, also vor dessen erstem Einsatz zum Behandeln einer Lösung, insbesondere Trinkwasser, steht in der Unterstützung von Reinigungs- oder Spülprozessen in einem Spül-Verfahrensschritt. Während des Herstellungsverfahrens können mehrere solche Spül-Verfahrensschritte eingesetzt werden, und zwar nicht nur hintereinander gleichartige Spülprozesse, um das Spülergebnis zu verbessern, sondern auch an verschiedenen Stellen des Herstellungsverfahrens. Beispielsweise ist es möglich, einem in der H-Form angelieferten granulatförmigen Ionenaustauschermaterials bevor dessen Umwandlung in die Ca-Form in einen Reaktions-Verfahrensschritt in Kontakt bringen mit einer Calziumhydroxid-Lösung folgt, das makroporöse schwachsaure lonenaustauschermaterial spülen und während des Spülens mit Ultraschall zu beaufschlagen. Dabei ist vorzugsweise vorgesehen ist, dass der Ultraschall über die Spülflüssigkeit auf das lonenaustauschermaterial übertragen wird.

Herstellungsbedingte Verschmutzungen in den Poren des granulatförmigen Ionenaustauschermaterials in der H-Form können somit nun vor der Führung desselben in die Ca-Form entfernt werden. Das ist vorteilhaft für den anschließenden Beladungsprozess im Reaktions-Verfahrensschritt. Andererseits können auch versteckte Verschmutzungen aus den Poren gelöst und nach Ablassen der Spülflüssigkeit entfernt werden. Unterstützt werden kann ein solcher Spielprozess nicht nur durch Ultraschall sondern auch durch Temperaturänderungen, sodass auch tief in den Poren oder Hohlräumen sitzende Verschmutzungen wirksam entfernt werden können.

Nach einem Reaktions-Verfahrensschritt, der das Rohgranulat in der H-Form mit Calziumionen beladen wird (beispielsweise durch in Kontakt bringen mit einer Calziumhydroxid-Lösung kann ebenfalls der Ultraschall in einem weiteren Spül-Verfahrensschritt eingesetzt werden, um Verschmutzungen und Reste der Beladungslösung wirksam zu entfernen, dabei können beispielsweise ausgefällte Ca(CO)₃ und Ca(OH)₂-Kristalle von der Oberfläche und auch tieferen Poren des Ionenaustauschermaterials (Granulats) gelöst werden. Das somit hergestellte Granulat ist dann bestens für den Einsatz in Trinkwasser geeignet, beispielsweise um dort die katalytische Fällung der Inhaltsstoffe aus der Lösung zu bewirken, insbesondere die Bildung von Kalkkristallkeimen im Wasser zu forcieren.

Beim erfindungsgemäßen Verfahren ist es möglich, den Ultraschall für beide oben dargestellten großen Gruppen, in einem im Reaktions-Verfahrensschritt und/oder in einem Spül-Verfahrensschritt einzusetzen. Das kann alternativ erfolgen oder es kann in einem Herstellungsverfahren der Einsatz von Ultraschall sowohl bei einem Reaktions-Verfahrensschritt als auch bei einem Spül-Verfahrensschritt - gegebenenfalls auch mehrmals - zum Einsatz kommen.

Weitere Vorteile und Einzelheiten der Erfindung werden anhand der nachfolgenden Figurenbeschreibung näher erläutert.

Die Figur 1 zeigt ein Ausführungsbeispiel eines Behälters zur Durchführung einer Ausführungsform zum erfindungsgemäßen Verfahren.

Die Figur 2 und die Figur 3 zeigen ähnliche Darstellungen eines solchen Behälters mit unterschiedlichen Konstruktionen zur Erzeugung des auf das lonenaustauschermaterial einwirkenden Ultraschalls.

Die Figuren 4a bis 4e zeigen in einem schematischen Flussdiagramm ein Ausführungsbeispiel eines Verfahrens zum Herstellen eines lonenaustauschermaterials, später zum Behandeln von Lösungen, insbesondere Trinkwasser, zum Einsatz kommen kann.

Die Figur 5 zeigt eine Einrichtung für ein Verfahren, bei dem strömendes lonenaustauschermaterial mit Ultraschall behandelt wird.

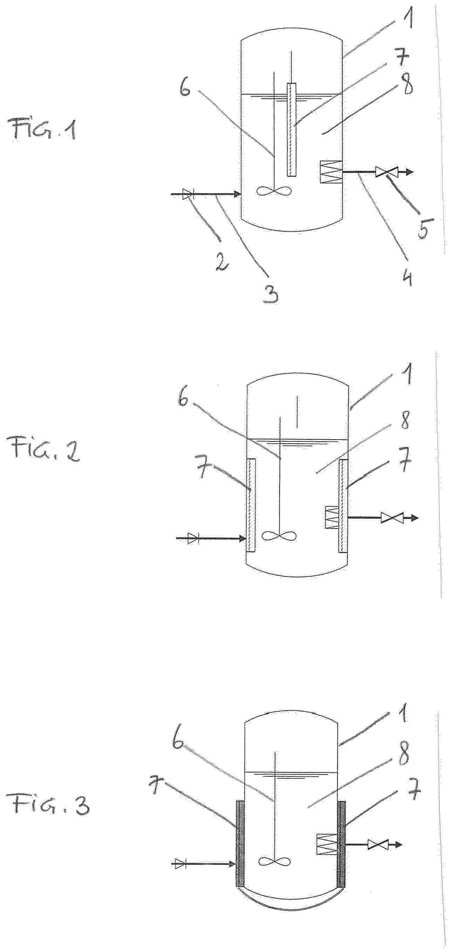

Der in der Figur 1 dargestellte Behälter weist einen mit einem Zulaufventil ausgestatteten Zulauf 3 auf. Der Ablauf 4 ist mit einem Ablaufventil 5 ausgestattet.

Im Behälter befindet sich ein schematisch dargestellter Rührer 6 sowie ein - bei diesem Ausführungsbeispiel zentral angeordneter - Ultraschallgeber 7; der beispielsweise hierzu elektrisch arbeiten kann. Der Ultrasachallgeber 7 taucht in eine Flüssigkeit 8 ein, in der sich das granulatförmige lonenaustauschermaterial befindet. Das lonenaustauschermaterial kann zusammen mit der Flüssigkeit über die Zulaufleitung 3 zugeführt werden. Es ist aber auch möglich, dass dafür eine gesonderte - nicht dargestellte - Einfüllöffnung vorgesehen ist. Ebenso kann der Ablauf bzw. die Entnahme des Ionenaustauschermaterials eine gesonderte, nicht dargestellte Öffnung erfolgen nachdem die Flüssigkeit über die Ablaufleitung 4 abgelassen worden ist. Ein geeigneter detaillierter Aufbau kann beispielsweise der EP 1 098 706 B1 entnommen werden. Im vorgelegten Fall geht es primär aber nicht um die Füllung und Entnahme des lonenaustauschermaterials, sondern um die Behandlung desselben, insbesondere mit dem erfindungsgemäßen Einsatz von Ultraschall.

Dem in Figur 1 dargestellten Ausführungsbeispiel ist - wie bereits erwähnt - der Ultraschallgeber zentral in der Flüssigkeit 8 eingetaucht, sodass der erzeugte Ultraschall das Granulat/Wasser-Gemisch (Mischung aus lonenaustauschermaterial und Flüssigkeit) vollständig durchdringen kann. Alternative Konstruktionen sind in den Figuren 2 und 3 dargestellt. Bei der in Figur 2 dargestellten Variante sind die Ultraschallgeber 7 an den Innenwänden des Behälters 1 so platziert, dass das Granulat/Wasser-Gemisch vollständig vom Ultraschall durchdrungen werden kann.

Bei der in Figur 3 dargestellten Variante werden die Ultraschallgeber 7 an der Außenwand des Behälters 1 angebracht und bilden dabei eine Ultraschallwanne, d.h. über die Behälterwände wird der Ultraschall an die darin befindliche Flüssigkeit (insbesondere Wasser) übertragen, welche ihrerseits den Ultraschall an das lonenaustauschermaterial weiterleitet und damit auf dieses einwirkt. Dieses Einwirken von Ultraschall auf das lonenaustauschermaterial hat nicht nur reinigende Wirkung, sondern auch reaktionsbeschleunigende und reaktionsverbessernde Wirkung.

Ein Ausführungsbeispiel der Erfindung, bei dem sowohl ein ultraschallunterstützter Reaktions-Verfahrensschritt, als auch ultraschallunterstütze Spül-Verfahrensschritte vorkommen, wird nun anhand der

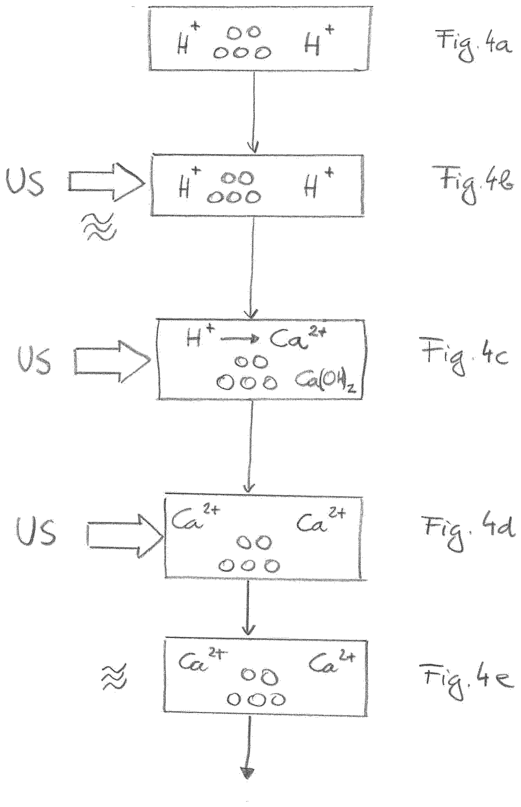

Figuren 4a bis 4e näher beschrieben.

Ausgangspunkt des erfindungsgemäßen Herstellungsverfahrens ist in einem vorhergehenden Prozessschritt (hier nicht näher beschrieben) hergestelltes lonenaustauschermaterial in Granulatform auf Polyacrylatbasis, das schwachsauer ist und in der H-Form vorliegt. Der vorangegangene Herstellungsprozess dieses Ionenaustauschermaterials (Rohgranulat) kann in derselben Produktionsstätte erfolgen wie das weitere Verfahren. Das Rohgranulat kann aber auch von Dritten zugekauft werden.

Für den Einsatz von einem schwachsauren lonenaustauschermaterial in der Trinkwasseraufbereitung, bei der eine katalytische Fällung von Inhaltsstoffen vorkommt, hat sich ein makroporöses lonenaustauschermaterial vorteilhaft erwiesen, bei dem
- die Porenoberfläche zwischen 0,5 und 20 m²/g liegt,
- der Porenradius zwischen 0,005 und 0,5 Mikrometer liegt und/oder
- das Porenvolumen zwischen 3 und 200mm³/g liegt.

Die Korngrößenverteilung des im wesentlichen kugelförmigen Rohgranulats ist derart, dass über 80 Gewichtsprozent der Granulatkörner Durchmesser zwischen 10nm und 3mm, vorzugsweise zwischen 0,4mm und 1,6mm aufweisen.

Es hat sich gezeigt, dass diese Dimensionierungen für den späteren Einsatz, vor allem in Trinkwasseranlagen, günstig ist.

Hat man ein lonenaustauschermaterial verwendet, das an seiner Oberfläche funktionelle Gruppen aufweist, die mit Gegenionen beladen sind oder Komplexe bilden, auch vorzugsweise mit Kationen und besonders vorzugsweise mit Calzium oder Kupfer, kann man beim späteren Einsatz eine katalytische Fällung, insbesondere Kalkkristallkeimbildung, im Wasser erzielen, wie sie ausführlich in der EP 0 957 066 B1 beschrieben ist. Zu diesem Zweck ist es auch günstig, wenn die funktionellen Gruppen Carboxylatgruppen (COO⁻) sind, die die Gegenionen tragen. Ausgehend von diesem in seiner chemischen Oberflächenstruktur optimierten lonenaustauschermaterial (Rohgranulat) wird nun im Verfahrensschritt 4b das erste Mal Ultraschall eingesetzt, und zwar in einem Spül-Verfahrensschritt, bei dem herstellungsbedingte Verschmutzungen aus dem Rohgranulat bzw. dessen Poren und Oberflächen wirksam entfernt werden können. Das Rohgranulat befindet sich dabei in Spülwasser, das beispielsweise in einem der Behälter der Figuren 1 bis 3 eingefüllt ist und mit Ultraschall beauftragt wird. Die Beschallung von Ultraschall auf das Rohgranulat erfolgt also indirekt durch Übertragung über die Lösung bzw. die Spülflüssigkeit (insbesondere Wasser).

Dieser Prozessschritt kann auch bei einer erhöhten Temperatur, beispielsweise in der Größenordnung von 80°C durchgeführt werden, um die Effizienz der Reinigung zu erhöhen. Dabei kann ein Temperaturprofil abgefahren werden (Heizelement im Behälter nicht dargestellt).

Damit ist das lonenaustauschermaterial am Ende vom Spül-Verfahrensschritt gemäß Figur 4b ideal vorbereitet, um nun von der H-Form in die Ca-Form überführt zu werden. Dieser Verfahrensschritt ist in Figur 4c gezeigt. Im Wesentlichen eignet sich dabei Verfahren wie es in der EP 1 098 706 B1 im Detail beschrieben ist, aber auch andere Verfahren sind durchaus denkbar. Hier hat sich gezeigt, dass die Reaktionszeit der Beladung mit Calziumionen verkürzt werden kann, wenn man die Calziumhydroxid -Lösung und das darin befindliche lonenaustauschermaterial mit Ultraschall beaufschlagt. Dazu eignen sich wiederum Einrichtungen gemäß den Figuren 1 bis 3, wobei nach dem Verfahrensschritt gemäß Figur 4b das mit Verunreinigungen behaftete Spülwasser abgelassen worden ist und anschließend die Calziumhydroxid-Lösung (Kalkmilch) eingefüllt worden ist.

Das Bevorzugte ist eine Variante der Erfindung, bei der ein Bodensatz aus noch ungelöstem Calziumhydroxid vorgesehen ist, wobei ständig ein Rühren erfolgt (auf Rührer 6). Durch den Rührer 6 einerseits und die Beaufschlagung mit Ultraschall andererseits wird nicht nur die Verfahrensdauer verkürzt, sondern auch der Beladungsgrad erhöht, sodass eine nahezu vollständige Beladung des Ionenaustauschermaterials mit Calziumionen erzielt werden kann. Bei diesem Verfahrensschritt gemäß Figur 4c dient der Einsatz von Ultraschall also nicht zu Reinigungszwecken sondern zur Erhöhung und Optimierung einer chemischen Reaktion. Auch hier ist es die Überführung in die Ca-Form in Kontakt bringen mit einer Calziumhydroxid-Lösung. In einem solchen Reaktions-Verfahrensschritt wird allgemein ein chemischer Stoff oder ein Stoffgemisch mit dem lonenaustauschermaterial in Kontakt gebracht, das damit reagiert. Durch gleichzeitigen Einsatz von Ultraschall kann diese Reaktion verbessert werden, einerseits im Hinblick auf die verkürzte Reaktionszeit und andererseits in Hinblick auf das Reaktionsergebnis.

Nach dem Reaktions-Verfahrensschritt gemäß Figur 4c kann ein weiterer Spül-Verfahrensschritt eingesetzt werden, wobei wiederum Ultraschall für eine verbesserte Reinigung zum Einsatz kommt. Das kann, mit Figuren 4d und 4e gezeigt, hintereinander erfolgen, beispielsweise zuerst der Einsatz von Ultraschall und dann das anschließende Durchspülen. Es ist aber auch möglich, dass Ultraschall und Spülung gleichzeitig appliziert werden, wie dies beispielsweise in Figur 4b angedeutet ist. Überhaupt muss der Ultraschall nicht ständig eingeschaltet sein, es kann auch sein, dass der Ultraschall intermittierend eingeschaltet ist.

Die Frequenzen des Ultraschalls g liegen günstigerweise zwischen 15kHz und 400kHz. Bevorzugt ist ein Frequenzbereich zwischen 20kHz und 50kHz, ganz besonders zwischen 20kHz und 40kHz. Bei dem Verfahrensschritt gemäß den Figuren 4d und 4e (ultraschallunterstützter Spül-Verfahrensschritt) werden produktionsbedingte Reste von Chemikalien, beispielsweise von Calziumhydroxid, wirksam aus den Poren des Granulates entfernt und stören dann beim anschließenden Einsatz, insbesondere im Trinkwasserbereich, nicht.

Somit ist es dann möglich, dass ultraschallunterstützte hergestellte reine lonenaustauschermaterial auch im Trinkwasser einzusetzen, beispielsweise zur katalytischen Fällung von Inhaltsstoffen, insbesondere zur Kalkkristall keimbildung.

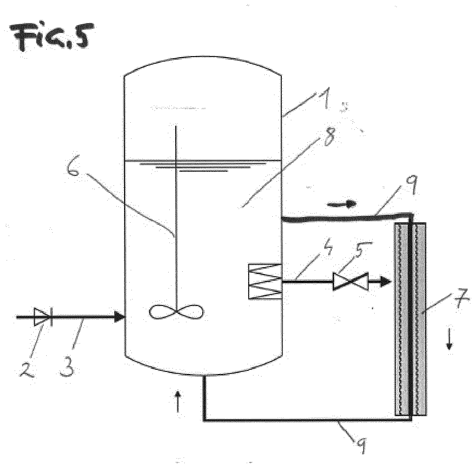

Figur 5 zeigt eine Alternative: Das lonenaustauschermaterial wird über den Zulauf 3 in den Reaktor (Behälter 1) geführt und dort mit dem Waschmedium (Wasser) vermengt (Rühren mit Rührer 6). Um den Waschprozess zu verbessern und zu beschleunigen wird das lonenaustascher-Granulat/WasserGemisch aus dem Reaktor über eine Rohrleitung 9 zurück in den Reaktor geführt (Kreislauf, Durchfluss). Die Umwälzpumpe ist nicht dargestellt. Dabei wird das Gemisch von innenliegenden oder auch außen am Rohr 9 angebrachten Ultraschallprozessoren 7 beschallt. Die Ultraschallbehandlung mittels Durchfluss kann auch auf die nachfolgende Beladung sowie die Endreinigung des beladenen Ionenaustauschermaterials eingesetzt werden.

Es können auch andere Ionenaustauschermaterialien eingesetzt werden, beispielsweise: Chelatbildende Ionenaustauschermaterialien binden hochselektiv Kationen aus Wässern. Kationen (häufig Schwermetalle im Trink- bzw. Prozesswasser) werden vom lonenaustauschermaterial mittels Komplexbildung gebunden und so zurückgehalten. Je nach lonenaustauschermaterial können so gezielt unterschiedliche Kationen aus Wässern entfernt bzw. rückgewonnen werden.

Zusammenfassend lässt sich feststellen, dass der Einsatz von Ultraschall in einem Reaktions-Verfahrensschritt diesen Prozess unterstützt, insbesondere das Beladen mit einem Kation, wobei gleichzeitig das Granulat gereinigt wird. Beispielsweise können die Feststoffanteile in der Kalkmilch (Calziumhydroxid-Lösung) besser dispergiert, desagglomeriert und/oder homogenisiert werden.

Damit können die Ca(OH)₂-Moleküle tiefer in die Poren des makroporösen Ionenaustauschermaterials (Granulat) eindringen. Auch tiefliegende funktionelle Gruppen (Carboxylgruppen) an der Oberfläche (im Inneren der Poren) können erreicht und erfolgreicher mit Kationen (beispielsweise Calzium) beladen werden.

Vor diesem Reaktions-Verfahrensschritt ist es günstig, das Rohgranulat des Ionenaustauschermaterials vorzureinigen. Durch die ultraschallunterstützte Reinigung können nach dem Reaktions-Verfahrensschritt auch tief in den Poren und Hohlräumen sitzende Verschmutzungen, insbesondere prozessbedingte Verschmutzungen und Reste der Lösung (Kalkmilch) entfernt werden.

Damit ist es insgesamt möglich, das Herstellungsverfahren zu verkürzen und den Einsatz von Ressourcen, beispielsweise Spülwasser, herabzusetzen. Außerdem ist das Ergebnis des Herstellungsverfahrens besser, weil der Einsatz von Ultraschall im Reaktions-Verfahrensschritt eine verbesserte chemische Reaktion, beispielsweise eine verbesserte Überführung von der H-Form in die Ca-Form erlaubt. Der Beladungszustand des Ionenaustauschermaterials mit Calziumionen ist dann im letztgenannten Fall höher als ohne den Einsatz von Ultraschall.

## Patentansprüche

1. Verfahren zum Herstellen eines Ionenaustauschermaterials zum Behandeln von Lösungen, insbesondere Trinkwasser, **dadurch gekennzeichnet, dass** das lonenaustauschermaterial während des Herstellungsverfahrens mit Ultraschall beschallt wird.

2. Verfahren nach Anspruch 1, **dadurch gekennzeichnet, dass** das lonenaustauschermaterial ein schwachsaures lonenaustauschermaterial ist.

3. Verfahren nach Anspruch 1 oder Anspruch 2, **dadurch gekennzeichnet, dass** das lonenaustauschermaterial in Granulatform verwendet wird, vorzugsweise auf Polyacrylatbasis, wobei die Korngrößenverteilung des im Wesentlichen kugelförmigen Granulats vorzugsweise derart ist, dass über 80 Gewichtsprozent der Granulatkörner Durchmesser zwischen 10nm und 3mm, und besonders bevorzugt zwischen 0,4mm und 1,6mm aufweisen

4. Verfahren nach einem der Ansprüche 1 bis 3, **dadurch gekennzeichnet, dass** makroporöse lonenaustauschermateriale verwendet werden, wobei vorzugsweise
- die Porenoberfläche zwischen 0,5 und 20 m²/g liegt
- der Porenradius zwischen 0,005 und 0,5 Mikrometer liegt und/oder
- das Porenvolumen zwischen 3 und 200mm³/g liegt.

5. Verfahren nach einem der Ansprüche 1 bis 4, **dadurch gekennzeichnet, dass** ein lonenaustauschermaterial verwendet wird, das an seiner Oberfläche funktionelle Gruppen aufweist, die mit Gegenionen beladen werden oder Komplexe bilden, vorzugsweise mit Kationen und besonders bevorzugt mit Ca²⁺ und/oder Cu²⁺, wobei die funktionellen Gruppen vorzugsweise Carboxylatgruppen (COO⁻) sind, welche die Gegenionen tragen

6. Verfahren nach Anspruch 5, **dadurch gekennzeichnet, dass** das lonenaustauschermaterial zunächst in der H-Form vorliegt und in einem Verfahrensschritt des Herstellungsverfahrens in die Ca-Form überführt wird, wobei das lonenaustauschermaterial vorzugsweise mit einer wässrigen gesättigten Calziumhydroxid Ca(OH)₂-Lösung in Kontakt gebracht wird, wobei besonders bevorzugt die Calziumhydroxid-Lösung mit noch ungelöstem Calziumhydroxid in Kontakt steht.

7. Verfahren nach einem der Ansprüche 1 bis 6, **dadurch gekennzeichnet, dass** das lonenaustauschermaterial während eines Reaktions-Verfahrensschrittes mit zumindest einem chemischen Stoff oder einem Stoffgemisch in Kontakt gebracht wird und damit reagiert.

8. Verfahren nach Anspruch 7, **dadurch gekennzeichnet, dass** das lonenaustauschermaterial im Reaktions-Verfahrensschritt zumindest zeitweise mit Ultraschall beschallt wird.

9. Verfahren nach einem der Ansprüche 1 bis 8, **dadurch gekennzeichnet, dass** das lonenaustauschermaterial in zumindest einem Spül-Verfahrensschritt zum Entfernen von insbesondere herstellungsbedingten Verunreinigungen mit einer Spülflüssigkeit, vorzugsweise Wasser, gespült wird, wobei der Spül-Verfahrensschritt zumindest teilweise zeitlich vor und/oder nach einem Reaktions-Verfahrensschritt liegt.

10. Verfahren nach Anspruch 9, **dadurch gekennzeichnet, dass** das lonenaustauschermaterial in wenigstens einem Spül-Verfahrensschritt zumindest zeitweise mit Ultraschall beschallt wird.

11. Verfahren nach einem der Ansprüche 1 bis 10, **dadurch gekennzeichnet, dass** die Frequenz des Ultraschalls zumindest zeitweise zwischen 15kHz und 400kHz liegt, und vorzugsweise zwischen 20kHz und 50kHz liegt und besonders bevorzugt zwischen 20 kHz und 40 kHz liegt.

12. Verfahren nach einem der Ansprüche 1 bis 11, **dadurch gekennzeichnet, dass** sich das lonenaustauschermaterial während der Beschallung mit Ultraschall in einem Behälter in einer Flüssigkeit befindet, wobei der Ultraschall über die Flüssigkeit an das lonenaustauschermaterial übertragen wird.

13. Verfahren nach Anspruch 12, **dadurch gekennzeichnet, dass** zumindest ein Ultraschallgeber im Inneren des Behälters in die Flüssigkeit eintauchend angeordnet wird (Figur 1) und/oder zumindest ein Ultraschallgeber an der Innenwand des Behälters angeordnet wird (Figur 2) und/oder zumindest ein Ultraschallgeber an der Außenwand des Behälters angeordnet wird und dabei eine Ultraschallwanne bildet (Figur 3).

14. Verfahren nach einem der Ansprüche 1 bis 13, **dadurch gekennzeichnet, dass** das lonenaustauschermaterial in einer Leitung geführt wird und dort mit Ultraschall behandelt wird.

15. Verwendung eines Ionenaustauschermaterials hergestellt nach einem Verfahren der Ansprüche 1 bis 14 zum katalytischen Fällen von Inhaltsstoffen aus Lösungen, insbesondere zur Kalkkristallkeimbildung in Wasser.
